# EUROPEAN PATENT SPECIFICATION

(11) **EP 2 902 120 B1**
(45) Date of publication and mention of the grant of the patent: **15.07.2020**
(21) Application number: 13867338.9
(22) Date of filing: 25.12.2013
(51) Int. Cl.: B08B 1/04, A47L 9/28, A47L 11/38, E04G 23/02, H01L 31/042

(54) **AUTONOMOUS-TRAVEL CLEANING ROBOT**
REINIGUNGSROBOTER MIT AUTONOMER FORTBEWEGUNG
ROBOT DE NETTOYAGE À DÉPLACEMENT AUTONOME

(30) Priority: 25.12.2012 JP 2012281077
(43) Date of publication of application: 05.08.2015
(73) Proprietor: Miraikikai, Inc., Kurashiki-shi, Okayama 710-0046 (JP)
(72) Inventor: MIYAKE, Tohru, Takamatsu-shi Kagawa 761-0301 (JP); MATSUUCHI, Hideto, Takamatsu-shi Kagawa 761-0301 (JP); MORITA, Kazuo, Takamatsu-shi Kagawa 761-0301 (JP)
(74) Representative: Schmidbauer, Andreas Konrad
(86) International application number: PCT/JP2013/007560
(87) International publication number: WO 2014/103290

(56) References cited:
- EP-A1- 2 366 964
- JP-A- H05 169 038
- JP-A- H06 324 610
- JP-A- H10 202 563
- JP-A- 2002 273 351
- JP-A- 2004 186 632
- JP-B2- 4 808 803
- US-A- 5 045 118
- US-A1- 2005 209 736
- US-A1- 2008 209 665
- US-A1- 2012 317 745

## Description

### TECHNICAL FIELD

The present invention relates to a self-propelled cleaning robot. More particularly, the present invention relates to a self-propelled cleaning robot that cleans a surface of a solar cell array used in solar power generation and a surface of a condensing mirror used in solar thermal power generation.

### BACKGROUND ART

Nowadays, a demand for power generation using renewable energy increases, and particularly solar power generation or solar thermal power generation using sunlight attracts attention.

For example, a solar power generation facility ranges from a facility having a power generation capacity of about 3 kilowatts to about 4 kilowatts provided in a standard home to a commercial large-scale power generation facility having a power generation capacity exceeding 1 megawatt, and is expected as an alternative power generation facility for thermal power generation or nuclear power generation. Even in the solar thermal power generation facility, there are many large-scale facilities having the power generation capacity exceeding 1 megawatt, and the solar thermal power generation facility is also expected as the alternative power generation facility for thermal power generation or nuclear power generation.

The power is generated by receiving solar radiation light from the sun in power generation such as the solar power generation and the solar thermal power generation, in which sunlight is used. Therefore, when a light receiving surface of the solar cell array (that is, a solar cell module) or the condensing mirror gets dirty, in the solar power generation, light transmission of a cover glass constituting the light receiving surface of the solar cell module degrades according to a level of dirt to decrease a power generation amount. In the solar thermal power generation, a reflection rate of the condensing mirror degrades to decrease the power generation amount. That is, in the solar power generation or solar thermal power generation, when the light receiving surface of the solar cell module or condensing mirror gets dirty, power generation performance degrades largely. Therefore, it is necessary to properly clean the solar cell array and the like to remove dirt on the light receiving surface of the solar cell array and the like.

The facility provided in a standard home can periodically be cleaned by a person. On the other hand, because the large-scale solar power generation facility has a huge surface area, it is difficult for a person to clean to remove dirt on the surface of the solar cell array. For example, assuming that a 1-megawatt solar power generation facility is constructed with solar cell modules each of which has power generation output of 100 watts, 10000 solar cell modules are provided in the whole solar power generation facility. In the case that one solar cell module has a 1-square-meter area, the area to be cleaned becomes 10000 square meters. Plural solar cell arrays each of which has a set of plural solar cell modules are provided in the solar power generation facility, the area of solar cell array ranges from about 50 square meters to about 1000 square meters although it depends on various field conditions. Accordingly, in the large-scale solar power generation facility, it is necessary to introduce the autonomous-travel cleaning robot that can run on the solar cell array and the like in an automatic or remote control manner.

Nowadays, various autonomous-travel cleaning robots that automatically clean a floor of a building are developed, and the autonomous-travel cleaning robots that clean the floor are available in the market. It is conceivable that the autonomous-travel cleaning robot is used as the robot that cleans the solar cell array.

However, frequently the autonomous-travel cleaning robot is developed based on an idea that a general vacuum cleaner is modified to a self-traveling machine in order to clean the floor of the building, and the autonomous-travel cleaning robot includes a suction pump that sucks dust, a blower, and the like. Power consumption increases in order to operate the suction pump. Additionally, a certain level of prolonged continuous work (for example, about one hour) is required in the large-scale solar power generation facility. A large-size battery is required for the prolonged continuous work, which results in a problem that the robot is enlarged to degrade portability. A dust separation unit such as a filter and a cyclone separator to separate air from dust is also required in the case that the dust is sucked, which leads to a problem the robot is further enlarged.

There has been developed an autonomous-travel cleaning robot that is downsized to reduce a weight without providing the suction pump and the like (see JP 2004-166968 A).

JP 2004-166968 A discloses an autonomous-travel cleaning robot including plural scooping-up brush rollers that are arranged so as to face a floor surface, a scraping-down brush roller that is provided so as to come into contact with the scooping-up brush roller, and a dust storage unit that includes an opening on a downstream side in a rotation direction of the scraping-down brush roller with respect to a contact point between the scooping-up brush roller and the scraping-down brush roller. Because the robot of Patent Document 1 does not include the suction pump, possibly the robot can perform the continuous work for a certain amount of time even if the battery is not so large.

EP 2 366 964 A1 discloses a cleaning system for solar fields, formed by heliostats or photovoltaic solar trackers, which is formed by a plurality of mobile autonomous robots, and at least one transport vehicle, which transports the robots, deposits them on the heliostats or on photovoltaic solar trackers for the robots to clean them, and collects them once they have finished the cleaning. The robots have a chassis in which there are arranged means for the displacement along all the reflective surfaces of the heliostats or photovoltaic modules of the solar trackers, cleaning means arranged on the front part of the chassis, for the cleaning of reflective surfaces or the photovoltaic modules, and navigation means, connected to the displacement means, which orient and direct the robot in its displacement along the reflective surfaces or of the photovoltaic modules. The cleaning means may be a cylindrical brush.

US 2005/209736 A1 discloses a self-propelled working robot comprising a traveling assembly having a wheel and first and second working assemblies that are detachable from the traveling assembly. One of the first and second working assemblies is selectively mounted on the traveling assembly. Each working assembly has a type identification means that enables identification of a type of the working assembly. The traveling assembly has a driving motor that drives the wheel, a wheel controlling means that controls rotation of the driving motor, a discriminating means that discriminates which of the working assemblies is mounted and a work signal output means that outputs a work signal for actuating the working assembly in response to a result of a discrimination. The working assembly may be a sucking and cleaning assembly comprising a rotating brush and a suction port which is located near the floor and which sucks dusts on the floor.

US 5, 045, 118, A discloses a combination of a brush sweeper and a vacuum cleaner, having an articulated sweeping head which consists of an electrically driven brush rotating bottom side forward in the direction of movement of the unit, a hopper in front of the brush, a brush housing and a vacuum system connected to the brush housing behind the brush.

US 2012/317745 A1 discloses an autonomous cleaning device that may function to remove dust or clean a floor at home. The autonomous cleaning device includes a brush unit to sweep up dust and a blade to guide the dust to a dust box. A brush drum unit may be mounted at a position deviating from the middle region of the bottom of the main body of the autonomous cleaning device.

Another cleaning robot is disclosed in US 2008/209665 A1.

### SUMMARY OF THE INVENTION

### PROBLEMS TO BE SOLVED BY THE INVENTION

However, the robot disclosed in JP 2004-166968 A has a structure in which the dust scooped up from the floor surface is stored in a dust storage unit provided in the robot although the suction pump is not provided. In the case that the solar cell array of the large-scale solar power generation facility is cleaned, because a huge amount of dust is generated, it is necessary to enlarge the dust storage unit in order to store the huge amount of dust. In the case of the robot disclosed in JP 2004-166968 A, the dust storage unit is enlarged although the battery is not enlarged too much, and therefore the robot is inevitably enlarged.

An object of the present invention is to provide a self-propelled cleaning robot cleaning robot that can continuously perform the cleaning even on the large space without increasing in size.

self-propelled cleaning robot cleaning robot that can continuously perform the cleaning even on the large space without increasing in size.

### MEANS FOR SOLVING THE PROBLEMS

According to the present invention, a self-propelled cleaning robot is provided as set forth in claim 1. Preferred embodiments of the present invention may be gathered from the dependent claims.

### EFFECT OF THE INVENTION

The flat surface can be swept by the brush unit of the brush when the brush is rotated. The airflow generated by the airflow forming cover and the rotation of the brush unit of the brush can form a flow directed toward the opposite direction to the robot body. The airflow can blow off the dust removed from the flat surface by the brush. Therefore, the flat surface can be cleaned without collecting the dust swept and removed from the flat surface. Accordingly, the robot body is not enlarged because the provision of the dust collecting portion in the robot body is not required. Because dust suction is not required, the necessity to provide the suction pump is eliminated. The power consumption is reduced, so that the robot body, so that the effect of blowing off the dust removed from the flat surface by the brush can be enhanced. When the cleaning unit includes an air supply unit, the airflow supplied from the air blow-off port of the air supply unit blows against the brush, so that the dust adhering to the brush can be removed by the airflow. The degradation of the effect of cleaning the flat surface with the brush can be prevented.

The rotation of the brush can sweep the flat surface cleaned by the brush unit of the brush. The airflow supplied from the air supply unit blows against the brush, so that the dust adhering to the brush can be removed by the airflow. The degradation of the effect of cleaning the flat surface with the brush can be prevented. Additionally, the dust removed from the flat surface by the brush can be blown off by the airflow supplied from the air supply unit. Therefore, the flat surface can be cleaned without collecting the dust swept and removed from the flat surface. Accordingly, the robot body is not enlarged because the provision of the dust collecting portion in the robot body is not required. Because dust suction is not required, the necessity to provide the suction pump is eliminated. The power consumption is reduced, so that the extremely large space can continuously be cleaned.

The flow directed toward the opposite direction to the robot body can be formed by the airflow generated by the airflow forming cover and the rotation of the brush unit of the brush. The airflow can blow off the dust removed from the flat surface by the brush. The air blow-off port of the air supply unit is provided in the inner surface of the airflow forming cover, so that the airflow supplied from the air blow-off port can surely blow against the brush.

When the air is blown from the blow-off port, the air can surely blow against the brush unit of the brush to enhance a brush unit cleaning effect.

### BRIEF DESCRIPTION OF THE DRAWINGS

Fig. 1 is a schematic plan view illustrating a self-propelled cleaning robot 1 according to an embodiment.
Fig. 2 is a schematic side view illustrating the self-propelled cleaning robot 1 of the embodiment.
Fig. 3 is a sectional view taken along a line III-III of Fig. 1.
Fig. 4 is a schematic front view illustrating the self-propelled cleaning robot 1 of the embodiment.
Fig. 5 is a schematic explanatory view illustrating a structure SP cleaned by the self-propelled cleaning robot 1 of the embodiment.
Fig. 6 is a schematic cross-sectional view illustrating a self-propelled cleaning robot 1 of the embodiment.
Fig. 7 is a schematic explanatory view illustrating a state in which the self-propelled cleaning robot 1 of the embodiment cleans a solar cell module.
Fig. 8 is a schematic explanatory view illustrating a self-propelled cleaning robot 1B according to another embodiment.
Fig. 9 is a schematic explanatory view illustrating a self-propelled cleaning robot 1C according to still another embodiment.
Fig. 10 is a schematic explanatory view illustrating a self-propelled cleaning robot 1D according to yet another embodiment.

### MODES FOR CARRYING OUT THE INVENTION

A self-propelled cleaning robot of the present invention is a robot that cleans a flat portion of a structure installed outside, and the self-propelled cleaning robot has a feature that prolonged cleaning work can be performed in spite of being compact and lightweight.

The structure that becomes a cleaning target of the self-propelled cleaning robot of the present invention is a structure including a flat surface, but there is no particular limitation to the structure as long as a self-propelled cleaning robot 1 can move along the flat surface. Examples of the structure include a solar cell array of a large-scale solar power generation facility, a condensing mirror in a solar thermal power generation facility, and a solar water heater. Examples of the flat surface to be cleaned include a surface (that is, light receiving surface of solar cell module) of the solar cell array, a surface (that is, light receiving surface of mirror) of the condensing mirror, and a light receiving surface of the solar water heater. In the description, the flat surface is a concept including not only a flat surface that is of a level surface like a solar cell array but also a substantially flat curved surface having a large curvature radius like a condensing mirror.

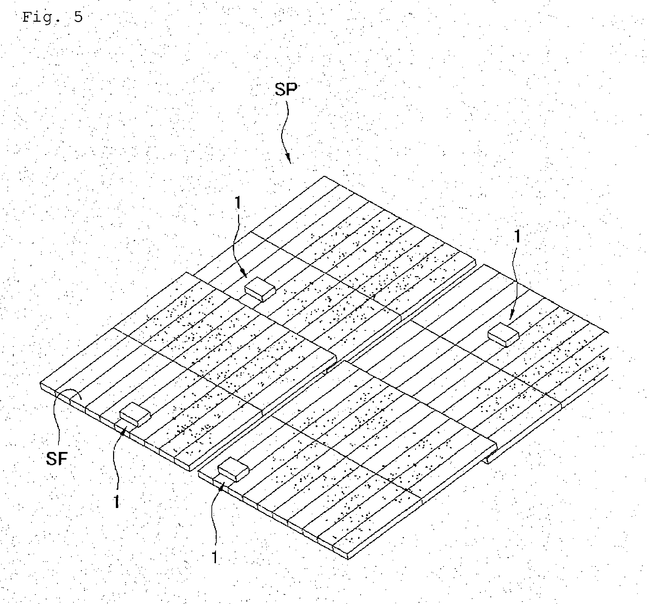

Hereinafter, the solar cell array, the condensing mirror in the thermal power generation facility, and the solar water heater are referred to as a structure SP. The cleaning target surface (that is, each light receiving surface) of the structure SP is referred to as a target flat surface SF (see Fig. 5).

### (Description of self-propelled cleaning robot 1)

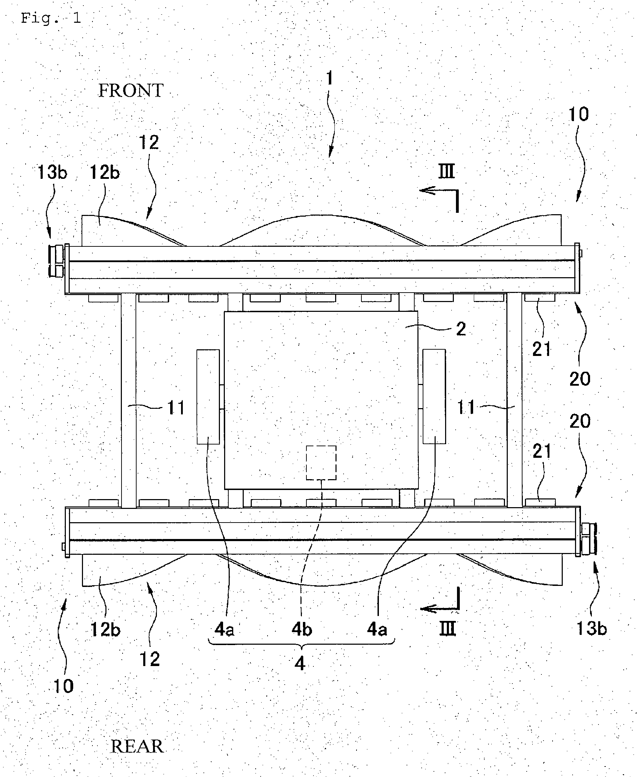

As illustrated in Fig. 1, a self-propelled cleaning robot 1 according to an embodiment includes a robot main body 2 provided with a moving mechanism running on the target flat surface SF of the structure SP and a pair of cleaning units 10 and 10 provided in the robot main body 2.

### (Robot main body 2)

As illustrated in Figs. 1 to 3, the robot main body 2 includes a moving mechanism 4 that moves the self-propelled cleaning robot 1 along the target flat surface SF of the structure SP.

The moving mechanism 4 includes a pair of lateral driving wheels 4a and 4a and an intermediate driving wheel 4b. Specifically, the pair of lateral driving wheels 4a and 4a and the intermediate driving wheel 4b are arranged so as to form a triangle in planar view (see Fig. 1).

Therefore, the self-propelled cleaning robot 1 can stably be arranged on the target flat surface SF.

A general wheel that can rotate only about a rotation shaft is used as the pair of lateral driving wheels 4a and 4a while an omni wheel (omni-directional movable wheel) is used as the intermediate driving wheel 4b. All the driving wheels 4a and 4b of the moving mechanism 4 are connected to driving motors, respectively, and the driving motor can independently drive each of the driving wheels 4a and 4b. Rotation speed of all the driving motors are controlled by a controller provided in the robot main body 2.

When the controller controls the rotation speed of each driving motor, the self-propelled cleaning robot 1 can linearly or turnably be moved.

Hereinafter, in the robot main body 2, a direction in which a side surface where the pair of lateral driving wheels 4a and 4a is not provided exists (in Fig. 1, a vertical direction) is referred to as a front-rear direction of the self-propelled cleaning robot 1.

The controller controls the rotation speed of each driving motor to control the movement of the self-propelled cleaning robot 1. A moving passage of the self-propelled cleaning robot 1 is stored in the controller, and the self-propelled cleaning robot 1 may automatically move on the target flat surface SF along the moving passage. The movement of the self-propelled cleaning robot 1 may be controlled by supplying a signal to the controller from the outside. For example, the movement of the self-propelled cleaning robot 1 may remotely be controlled using a remote controller.

The driving wheels 4a, 4a, 4b is not limited to the above configuration, but the driving wheels 4a,4a,4b may have any configuration as long as the driving wheels 4a,4a,4b can linearly or turnably move the self-propelled cleaning robot 1. For example, the omni wheel that is of the intermediate driving wheel 4b is not used as the driving wheel, but only the pair of driving wheels 4a and 4a may be used as the driving wheel. Instead of the omni wheel, a passive wheel (caster) may be used as the intermediate driving wheel 4b. Even in this case, the moving direction of the self-propelled cleaning robot 1 can freely be changed by adjusting the rotation speed of the pair of driving wheels 4a and 4a. The self-propelled cleaning robot 1 may have a structure similar to that of a usual vehicle. That is, four wheels are provided, and the two front (or rear) wheels may be used as a steering wheel while other wheels are used as a driving wheel, or the four wheels may be used as the driving wheel.

### (Cleaning unit 10)

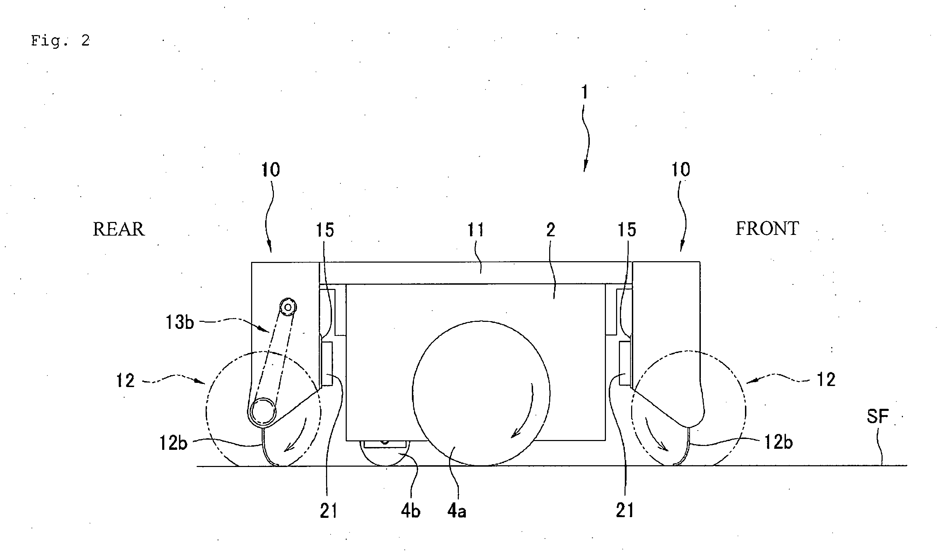

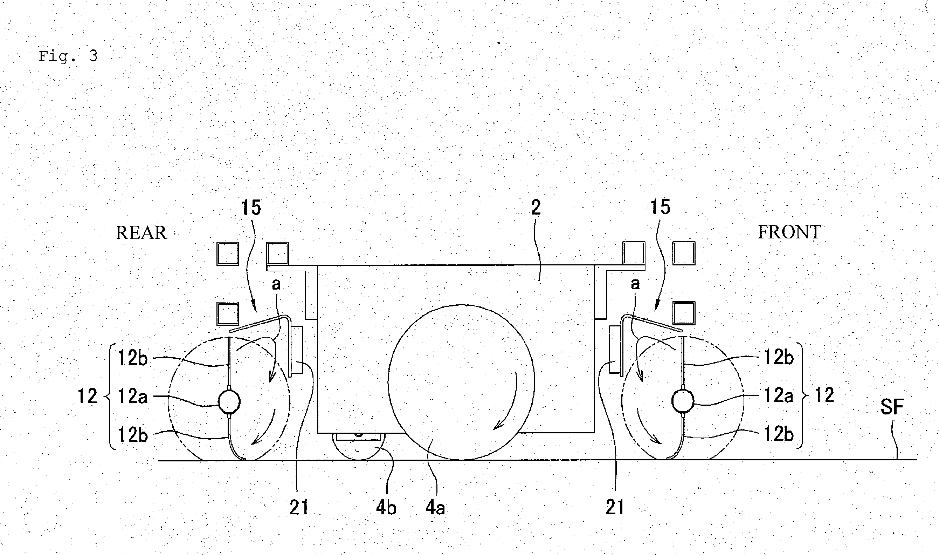

As illustrated in Figs. 1 to 3, a pair of cleaning units 10 and 10 is provided in front of and at the rear of the robot main body 2, respectively. Because the pair of cleaning units 10 and 10 has the substantially identical structure, the cleaning unit 10 (located on the right side in Figs. 2 and 3) located in front of the robot main body 2 will be described below.

As illustrated in Figs. 1 and 2, the cleaning unit 10 is coupled to the robot main body 2 by a frame 11. The cleaning unit 10 includes a brush 12. The brush 12 includes a shaft unit 12a and a pair of brush units 12b and 12b that are provided on an outer circumferential surface of the shaft unit 12a.

Both end portions of the shaft unit 12a are rotatably supported by the frame of the cleaning unit 10. Additionally, the shaft unit 12a is provided such that an axis direction of the shaft unit 12a is substantially parallel to the target flat surface SF when the self-propelled cleaning robot 1 is placed on the target flat surface SF.

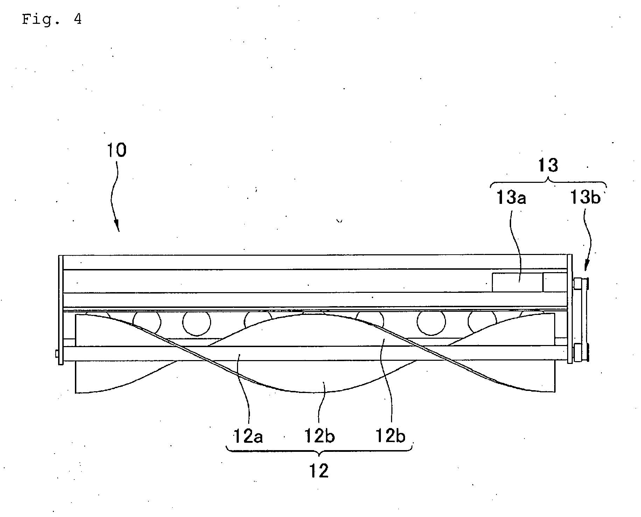

The pair of brush units 12b and 12b is formed by arraying plural brushes along the axis direction. Each brush unit 12b is provided such that a brush position deviates along a circumferential direction according to the movement of the shaft unit 12a in the axis direction (see Figs. 1 and 4). In other words, each brush unit 12b is formed into a spiral shape on a side surface of the shaft unit 12a. The pair of brush units 12b and 12b are arranged so as to form a double spiral. That is, the pair of brush units 12b and 12b is formed such that the brushes of the pair of brush units 12b and 12b rotates by 180 degrees with respect to each other in a section orthogonal to the axis direction of the shaft unit 12a (see Fig. 3).

As illustrated in Fig. 4, the cleaning unit 10 includes a brush driving unit 13 that rotates the shaft unit 12a about the axis of the brush 12. Specifically, the brush driving unit 13 includes a brush driving motor 13a, and a main shaft of the brush driving motor 13a is coupled to an end portion of the shaft unit 12a of the brush 12 by a belt pulley mechanism 13b. An operating state of the brush driving motor 13a is controlled by the controller.

Therefore, when the brush driving motor 13a is activated, a driving force of the brush driving motor 13a is transmitted to the shaft unit 12a of the brush 12 through the belt pulley mechanism 13b, which allows the brush 12 to be rotated.

In the state in which the self-propelled cleaning robot 1 is placed on the target flat surface SF, the brush driving motor 13a is controlled so as to rotate in a direction in which an leading end portion of the brush unit 12b of the brush 12 comes close to the target flat surface SF while separating from the robot body 2 (an arrow direction in Figs. 2 and 3). That is, in Figs. 2 and 3, the activation of the brush driving motor 13a is controlled such that the brush 12 of the cleaning unit 10 located on a front surface side (right side) of the robot body 2 rotates counterclockwise, and such that the brush 12 of the cleaning unit 10 located on a rear surface side (left side) of the robot body 2 rotates clockwise.

As illustrated in Fig. 3, the cleaning unit 10 includes an airflow forming cover 15 that is provided between the brush 12 and the front surface of the robot main body 2. The airflow forming cover 15 is a member that extends along the axis direction of the shaft unit 12a of the brush 12 so as to partially cover the brush 12. Specifically, the airflow forming cover 15 is provided so as to cover a portion from the side of the robot body 2 in the brush 12 to an upper portion (that is, a portion located on the opposite side to the target flat surface SF) of the brush 12. The airflow forming cover 15 is formed such that a surface on the side of the brush 12 is recessed from the side of the brush 12. Specifically, the airflow forming cover 15 includes an opening on the side of the brush 12, and is formed into an inverse chevron shape in section.

Using the self-propelled cleaning robot 1 of the embodiment having the above configuration, the target flat surface SF can be cleaned as follows.

At first, the self-propelled cleaning robot 1 of the embodiment is placed on the target flat surface SF. The self-propelled cleaning robot 1 is placed on the target flat surface SF while all the driving wheels 4a, 4a, 4b are in contact with the target flat surface SF (see Figs. 2 and 3).

The brush 12 rotates when the brush driving units 13 of the pair of cleaning unit 10 and 10 are activated. The brush unit 12b of each brush 12 moves such that the leading end portion of the brush unit 12b sweeps the target flat surface SF.

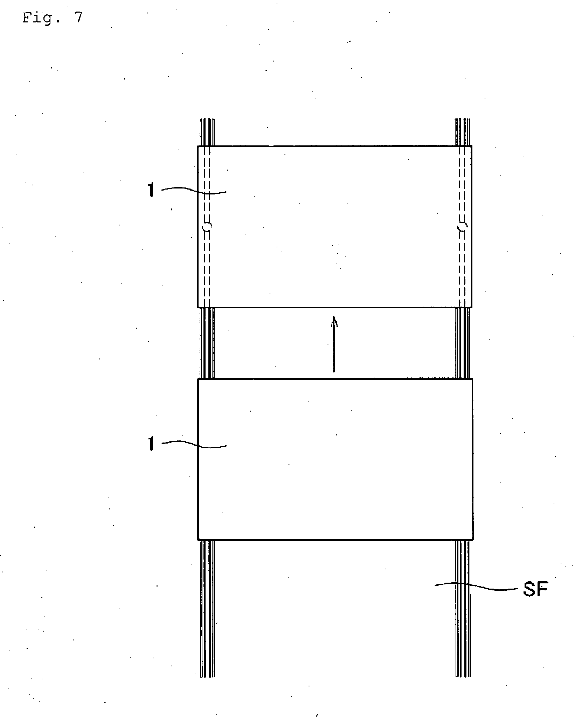

At this point, when the self-propelled cleaning robot 1 is moved by the moving mechanism 4, the target flat surface SF can sequentially be swept by the brush unit 12b of the brush 12. Therefore, the target flat surface SF can sequentially be cleaned in association with the movement of the self-propelled cleaning robot 1 (see Fig. 7).

In the self-propelled cleaning robot 1 of the embodiment, the target flat surface SF is only swept by the brush unit 12b of the brush 12, and a mechanism which recovers the swept dust is not provided. Therefore, the dust in the portion (sweeping portion) with which the brush unit 12b of the brush 12 comes into contact floats from the target flat surface SF.

At the same time, the cleaning unit 10 rotates in the direction in which the leading end portion of the brush unit 12b of the brush 12 comes close to the target flat surface SF while separating from the robot body 2. On the side (below) of target flat surface SF with respect to the shaft unit 12a of the brush 12, an airflow (blow-off flow) is generated outward from the robot body 2 in association with the movement of the brush unit 12b. For this reason, little dust exists on the surface of the sweeping portion because the dust floating from the target flat surface SF is blown outward from the sweeping portion by the blow-off flow.

On the other hand, above the shaft unit 12a of the brush 12, the airflow is generated toward the robot body 2. The airflow is returned to the airflow outward from the robot body 2 by the airflow forming cover 15 (see arrow a in Fig. 3). That is, the blow-off flow is strengthened by the airflow forming cover 15. The dust floating from the target flat surface SF is blown farther away from the sweeping portion by the blow-off flow, so that dirt of a neighborhood of the sweeping portion due to the blown dust can be prevented.

Although the blown dust drops eventually, only little dust drops on each site because the dust is diffused by the blow-off flow. Additionally, because the blown dust is further diffused by wind and the like, the less dirt exists in the neighborhood than before the brush unit 12b of the brush 12 comes into contact with the sweeping portion, even if the dust flies.

Accordingly, dirt of other portions due to the blow-off of the dust can be prevented. Therefore, the target flat surface SF can be cleaned without collecting the dust swept and removed from the target flat surface SF. The robot body 2 is not enlarged because the provision of the dust collecting portion in the robot body 2 is not required. Because dust suction is not required, power consumption necessary for the activation of the self-propelled cleaning robot 1 can be reduced, and the extremely large space can continuously be cleaned.

For example, in the case that the target flat surface SF is the surface of the solar cell array of the large-scale solar power generation facility installed in a desert or a volcanic ash fall area, the dust deposited on the surface of the solar cell array is fine sand and the like. In the space where the large-scale solar power generation facility is installed, because generation of a shade interrupting the power generation is prevented, usually a building and the like becoming an obstacle are not arranged in a surrounding area. For this reason, the strong wind blows around the large-scale solar power generation facility. The sand and the like on the surface of the solar cell array are cleaned with the self-propelled cleaning robot 1 of the embodiment, and the sand, the ashes, and the like are temporarily taken off and blown from the surface of the solar cell array. Therefore, the sand is diffused away with a help of wind action, and the surface of the solar cell array can be put into the less-dust state.

Because the power consumption necessary for the cleaning can be reduced in the self-propelled cleaning robot 1, the self-propelled cleaning robot 1 can perform the prolonged continuous work. Accordingly, the solar cell array of the large-scale solar power generation facility can efficiently be cleaned.

When the brush 12 rotates in the above direction, efficiency of removing the dust can be enhanced. Alternatively, the brush 12 may rotate reversely. In this case, below the shaft unit 12a of the brush 12, because the airflow is generated toward the robot body 2, the dust floated by the brush 12 flows in the airflow forming cover 15. However, above the shaft unit 12a of the brush 12, because the airflow is generated outward from the robot body 2, finally the dust floated from the flat surface can fly away outward.

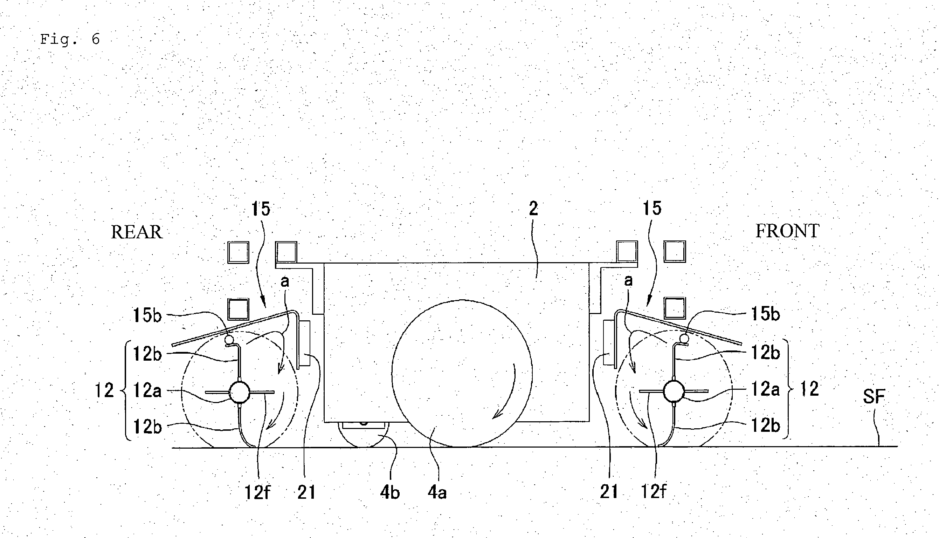

In Fig. 3, the leading end of the airflow forming cover 15 extends to over the shaft of the brush 12. However, there is no particular limitation to the position of the leading end of the airflow forming cover 15. However, the effect that the airflow is formed by the rotation of the brush 12 can be enhanced with increasing area where the upper portion of the brush 12 is covered with the airflow forming cover 15. Accordingly, preferably the airflow forming cover 15 is provided so as to cover the whole upper portion of the brush 12 (see Fig. 6). For example, as illustrated in Fig. 6, the leading end of the airflow forming cover 15 may extend to the position where the leading end of the brush 12 is farthest away from the robot body 2.

### (Blade 12f)

A blade 12f may be provided on the shaft unit 12a of the brush 12 aside from the brush unit 12b (see Fig. 6). When the blade 12f is provided, the airflow is formed by not only the brush unit 12b but also the blade 12f, so that the airflow formed by the rotation of the brush 12 can be strengthened. Because the blade 12f is desirably provided so as not to interfere with the brush unit 12b of the brush 12, the blade 12f is desirably provided into the spiral shape in the case that the brush unit 12b of the brush 12 is provided into the spiral shape like the above example.

There is no particular limitation to a shape of the blade 12f as long as the airflow can be formed by the rotation of the brush 12. For example, the blade 12f can be formed by providing a plate-like member on the shaft unit 12a in an upright manner. In this case, although there is no particular limitation to a length (a radial length of the shaft unit 12a) of the plate-like member, desirably the plate-like member has the length to a degree in which the plate-like member does not interrupt the cleaning performed by the brush unit 12b. For example, when the plate-like member is set to a half length of the brush unit 12b, the airflow forming effect can efficiently be obtained.

There is no particular limitation to a position of the blade 12f or the number of blades 12f. For example, as illustrated in Fig. 6, in a circumferential direction of the shaft unit 12a, when the blade 12f is provided at each position between the pair of brush units 12b and 12b (that is, two blades), the airflow forming effect can efficiently be enhanced while an increase in weight of the brush 12 is prevented.

### (Air supply unit 20)

An air supply unit 20 that blows air toward the brush 12 may be provided. In this case, the airflow supplied from the air supply unit 20 can blow against the brush unit 12b of the brush 12. Therefore, the dust adhering to the brush unit 12b of the brush 12 is removed by the airflow, so that the brush unit 12b of the brush 12 can be kept clean. Therefore, the degradation of the effect that the brush unit 12b of the brush 12 cleans the target flat surface SF can be prevented.

There is no particular limitation to a configuration of the air supply unit 20. For example, the airflow can be formed by providing plural fans 21 in an inner wall of the airflow forming cover 15. An air exhaust port is provided instead of the plural fans 21, and the air may be supplied from the air supply unit such as a blower to the air exhaust port through a duct.

In the case that the air is supplied from the air supply unit such as the blower, the air may be blown from the shaft unit 12a of the brush 12 toward the brush unit 12b. For example, a hollow pipe is used as the shaft unit 12a, and a blow-off port is provided in a side surface of the hollow pipe. When the air is supplied from a shaft end of the shaft unit 12a into the pipe, the air can be blown out from the blow-off port. Therefore, the air surely blows against the pair of brush units 12b and 12b of the brush 12, so that the effect of cleaning the brush unit 12b can be enhanced.

### (Squeezing member 15b)

A member that squeezes the brush unit 12b of the brush 12 may be provided as a method for cleaning the brush unit 12b. For example, as illustrated in Fig. 6, when a squeezing member 15b is provided inside the airflow forming cover 15, the brush unit 12b comes inevitably into contact with the squeezing member 15b during one revolution of the brush 12, so that the sand adhering to the brush unit 12b can be dropped. There is no particular limitation to the position, shape, and installation method of the squeezing member 15b. However, in order to prevent the degradation of the airflow forming effect of the airflow forming cover 15 due to the provision of the squeezing member 15b, desirably the squeezing member 15b is installed such that a gap is formed between the squeezing member 15b and the inner surface of the airflow forming cover 15. For example, in the case that the rod-shaped squeezing member 15b is provided, both ends or the intermediate portion of the squeezing member 15b is coupled to the inner surface of the airflow forming cover 15 by a bracket and the like. The gap is formed between the squeezing member 15b and the inner surface of the airflow forming cover 15 except the position where the bracket is provided, so that the degradation of the airflow forming effect of the airflow forming cover 15 due to the provision of the squeezing member 15b can be prevented.

### (Brush unit 12b)

There is no particular limitation to a length of the brush constituting the pair of brush units 12b and 12b. The length of the brush may be formed to an extent in which a leading end of the brush comes into contact with the target flat surface SF when the self-propelled cleaning robot 1 is placed on the target flat surface SF. For example, assuming that a distance from the target flat surface SF to an outer circumferential surface of the shaft unit 12a is 37 mm when the self-propelled cleaning robot 1 is placed on the target flat surface, preferably the length of the brush ranges from about 45 mm to about 47 mm. However, the length of the brush depends on other robot parameters such as rigidity of the brush, but the length of the brush is not limited to the above size.

Each brush unit 12b is not necessarily arranged into the spiral shape. Alternatively, for example, the brush may be arranged along the axis direction of the shaft unit 12b. The arrangement of the brush is not particularly limited.

### (Other examples of robot main body 2)

As illustrated in Fig. 7, the self-propelled cleaning robot 1 is suitable for the case that the surface of each structure body is sequentially cleaned in the structure SP constructed with plural structure bodies like the solar cell array constructed with the plural solar cell modules.

Although the self-propelled cleaning robot 1 can simultaneously clean the surfaces of the plural structure bodies constituting the structure SP such as the solar cell array constructed with the plural solar cell modules, the cleaning is facilitated when the self-propelled cleaning robot 1 has the following structures.

There is no particular limitation to the structure of the structure SP cleaned by the following self-propelled cleaning robots 1B to 1D. However, the self-propelled cleaning robots 1B to 1D are suitable for the structure SP, such as the solar cell array, which is formed by arraying plural structure bodies such as the solar cell modules into a lattice shape, and the structure SP that is prolonged in a horizontal direction rather than the vertical direction. Hereinafter, the vertical direction (that is, a direction in which the structure SP is short in length) of the structure SP is referred to as a short axis direction of the structure SP.

Because the following self-propelled cleaning robots 1B to 1D have the basic structure substantially identical to that of the self-propelled cleaning robot 1, only a portion having a configuration different from the self-propelled cleaning robot 1 will be described below.

### (Self-propelled cleaning robot 1B)

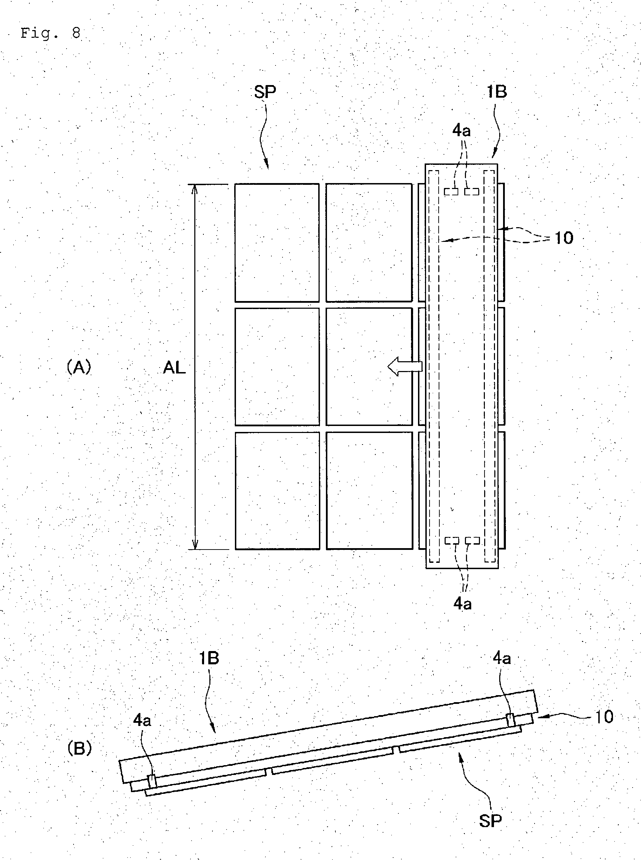

As illustrated in Fig. 8, compared with self-propelled cleaning robot 1, a width (that is, the axis direction of the brush 12 in the cleaning unit 10) is increased in the self-propelled cleaning robot 1B. Specifically, the length in the axis direction of the brush 12 is longer than a length AL (hereinafter, simply referred to as the length AL of the structure SP) in the short axis direction of the structure SP. That is, the length in the axis direction of the brush 12 is set to a length in degree in which the brush unit 12b of the brush 12 is in contact with the whole of the plural structure bodies of the structure SP.

The self-propelled cleaning robot 1B having the above structure is placed on the target flat surface SF, and the axis direction of the brush 12 is aligned with the short axis direction of the structure SP. At this point, when the driving wheel 4a of the moving mechanism 4 is activated, the self-propelled cleaning robot 1B is moved in a width direction (in Fig. 8, the horizontal direction) of the structure SP, so that the plural structure bodies can simultaneously be cleaned.

### (Self-propelled cleaning robot 1C)

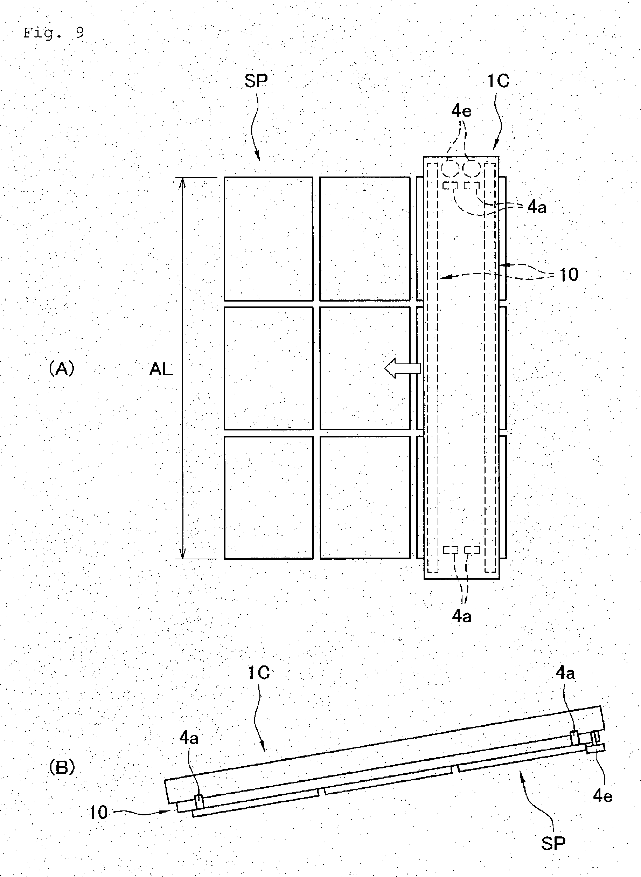

In the self-propelled cleaning robot 1C shown in Fig. 9, an edge roller 4e is provided in the self-propelled cleaning robot 1B. Other configurations of the self-propelled cleaning robot 1C are substantially similar to those of the self-propelled cleaning robot 1B.

The edge roller 4e is provided at the position where the self-propelled cleaning robot 1C comes into contact with an upper end edge of the structure body of the structure SP when the self-propelled cleaning robot 1C is arranged on the structure SP. The self-propelled cleaning robot 1C is hooked on the structure SP by the edge roller 4e. Therefore, the self-propelled cleaning robot 1C can stably be arranged on the target flat surface SF of the structure SP compared with the self-propelled cleaning robot 1B. In other words, the self-propelled cleaning robot 1C can be prevented from falling from the target flat surface SF of the structure SP compared with the self-propelled cleaning robot 1B.

Additionally, a rotation shaft of the edge roller 4e is provided in parallel with the target flat surface SF, and the edge roller 4e can roll on the upper end edge of the structure body of the structure SP when the self-propelled cleaning robot 1C moves in the width direction of the structure SP. Therefore, even if the edge roller 4e is provided, the self-propelled cleaning robot 1C can move smoothly on the target flat surface SF of the structure SP.

### (Self-propelled cleaning robot 1D)

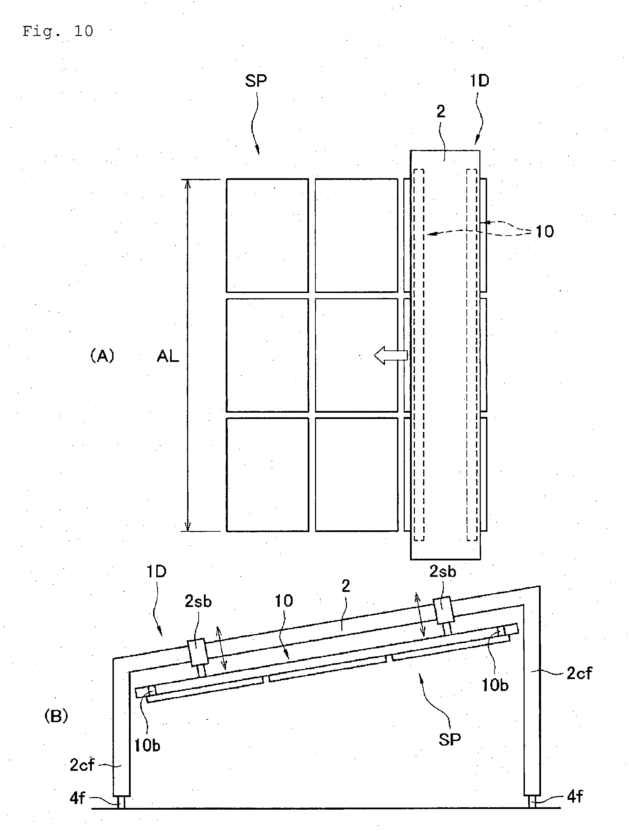

In the self-propelled cleaning robot 1D shown in Fig. 10, a pair of moving legs 2cf and 2cf is provided in the robot main body 2 of the self-propelled cleaning robot 1B, and the self-propelled cleaning robot 1D is driven by driving wheels 4f of the pair of moving legs 2cf and 2cf. Other configurations of the self-propelled cleaning robot 1D are substantially similar to those of the self-propelled cleaning robot 1B.

The pair of moving legs 2cf and 2cf is provided at both the ends in the width direction of the robot main body 2. When the self-propelled cleaning robot 1D is arranged so as to stride over the structure SP, the robot main body 2 (in other words, the axis direction of the brush 12 of the cleaning unit 10) is parallel to the target flat surface SF of the structure SP, and the length of each moving leg 2cf is adjusted such that the brush unit 12b of the brush 12 of the cleaning unit 10 comes into contact with the target flat surface SF of the structure SP.

Each of the pair of moving legs 2cf and 2cf includes the driving wheel 4f at the lower end thereof. The driving wheel 4f is provided so as to roll in the direction orthogonal to the axis direction of the brush 12.

Therefore, when the self-propelled cleaning robot 1D including the pair of moving legs 2cf and 2cf is arranged so as to stride over the structure SP, and when the self-propelled cleaning robot 1D is arranged such that the axis direction of the brush 12 is aligned with the short axis direction of the structure SP, the self-propelled cleaning robot 1D can be moved in the width direction (in Fig. 8, the horizontal direction) of the structure SP along the target flat surface SF of the structure SP, and the plural structure bodies can simultaneously be cleaned.

In the self-propelled cleaning robot 1D, the cleaning unit 10 may move relative to the robot main body 2. For example, both the end portions (in Fig. 10(B), end portions in the horizontal direction) of the cleaning unit 10 are coupled to the robot main body 2 while an ascending and descending unit 2sb such as an air cylinder and a screw mechanism is interposed therebetween. At this point, the self-propelled cleaning robot 1C including the pair of moving legs 2cf and 2cf is arranged so as to stride over the structure SP, and the ascending and descending unit 2sb is activated. Therefore, the cleaning unit 10 can be brought close to and separated from the target flat surface SF of the structure SP. In this case, even if a height or an inclination of the target flat surface SF of the structure SP vary according to the installation state of the structure SP, the contact state between the brush unit 12b of the brush 12 of cleaning unit 10 and the target flat surface SF of the structure SP can be set to the state suitable for the cleaning by the adjustment of the activation of the ascending and descending unit 2sb.

As to the contact state (that is, an activation amount of ascending and descending unit 2sb) between the brush unit 12b of the brush 12 and the target flat surface SF of the structure SP, a distance between the cleaning unit 10 and the target flat surface SF is measured with a contact sensor or a non-contact sensor, and the activation of the ascending and descending unit 2sb may be controlled based on the measured value of the distance.

An ascending and descending unit, which has a function of lifting the cleaning unit 10 while the cleaning unit 10 is descended by own weight in releasing the lifting, may be used as the ascending and descending unit 2sb. In this case, when the pair of driven wheels 10b and 10b is provided at both the ends of the cleaning unit 10, the cleaning unit 10 is descended until both the pair of driven wheels 10b and 10b comes into contact with the target flat surface SF of the structure SP. Accordingly, even if a special sensor is not provided, the brush unit 12b of the brush 12 and the target flat surface SF of the structure SP can be put into a predetermined contact state.

A mechanism that presses the cleaning unit 10 against the target flat surface SF of the structure SP by a predetermined biasing force while the cleaning unit 10 is descended may also be provided. For example, a biasing unit such as a spring may be provided between the cleaning unit 10 and the robot main body 2. In this case, the pair of driven wheels 10b and 10b can be maintained to be in contact with the target flat surface SF of the structure SP by a biasing force of the biasing unit, the cleaning unit 10 (that is, the brush unit 12b of the brush 12) moves while keeping a distance to the target flat surface SF substantially constant. Even if a step and the like exist, the cleaning unit 10 is moved along the target flat surface SF while a contact state between the brush unit 12b of the brush 12 and the target flat surface SF of the structure SP is substantially kept constant, so that the cleaning can stably be performed.

### INDUSTRIAL APPLICABILITY

The self-propelled cleaning robot of the present invention is suitable for the robot that cleans the solar cell array of the large-scale solar power generation facility, the condensing mirror of the solar thermal power generation facility, the light receiving surface in the solar water heater, and the like.

## Claims

1. A self-propelled cleaning robot (1) that is adapted to self-travel on and clean a flat surface (SF) of a structure (SP) installed outside, the self-propelled cleaning robot (1) comprising:
a robot body (2) in which a self-propelled moving means (4) is provided; and
a cleaning unit (10) that is provided in a side surface of the robot body (2),
wherein the cleaning unit (10) includes:
a rotatable brush (12) that includes a shaft unit (12a) and a brush unit (12b) provided on the shaft unit (12a); and
an airflow forming cover (15) that extends along the axis direction of the shaft unit (12a) of the brush (12) and is provided in the cleaning unit (10) between the brush (12) and the side surface of the robot body (2) so as to cover a portion from a side of the robot body (2) to an upper portion of the brush (12) on an opposite side to the flat surface (SP) during cleaning of the flat surface (SF), wherein the airflow forming cover (15) is formed such that an inner surface of the airflow forming cover (15) on the side of the brush (12) is recessed from the brush (12) and forms a recessed space, and is formed into an inverse chevron shape in section, wherein the brush (12) is exposed to the outside in radial directions except for the airflow forming cover (15),
wherein the brush (12) is controlled so as to rotate during cleaning of the flat surface (SF) in such a way that
a) below the shaft unit (12a) of the brush (12), an outward airflow is generated outward from the robot body (2) in association with the movement of the brush unit (12b), whereas above the shaft unit (12a) of the brush (12), an inward airflow is generated toward the robot body (2), and the inward airflow is returned to the outward airflow outward from the robot body (2) by the airflow forming cover (15), so that dust floated from the flat surface (SF) is blown away; or
b) below the shaft unit (12a) of the brush (12), an inward airflow is generated toward the robot body (2) in association with the movement of the brush unit (12b), so that dust floated from the flat surface (SF) flows in the airflow forming cover (15), whereas above the shaft unit (12a) of the brush (12), an outward airflow is generated outward from the robot body (2), so that dust floated from the flat surface (SF) can fly away outwardly.

2. The self-propelled cleaning robot according to claim 1, alternative a), wherein the brush (12) is controlled so as to rotate in a direction in which a radially outside end portion of the brush unit (12b) comes close to the flat surface (SF) while moving away from the robot body (2) during cleaning of the flat surface (SF).

3. The self-propelled cleaning robot according to claim 1 or 2, wherein the cleaning unit (10) includes an air supply unit (20) that is adapted to blow air toward the brush (12), and
an air blow-off port of the air supply unit (20) is provided in the inner surface of the airflow forming cover (15) .

4. The self-propelled cleaning robot according to any one of claims 1 or 2, wherein the shaft unit (12a) of the brush (12) is constructed with a hollow pipe,
a blow-off port that blows air is provided in a side surface of the shaft unit (12a), and
the cleaning unit (10) includes an air supply unit (20) that is adapted to supply the air to the shaft unit (12a) of the brush (12).

## Patentansprüche

1. Selbstfahrender Reinigungsroboter (1), der ausgebildet ist, um auf einer flachen Oberfläche (SF) einer außen installierten Struktur (SP) selbst zu fahren und diese zu reinigen, wobei der selbstfahrende Reinigungsroboter (1) Folgendes aufweist:
einen Roboterkörper (2), in dem Selbstfahrbewegungsmittel (4) vorgesehen sind; und
eine Reinigungseinheit (10), die in einer Seitenfläche des Roboterkörpers (2) vorgesehen ist,
wobei die Reinigungseinheit (10) Folgendes aufweist:
eine drehbare Bürste (12), die eine Welleneinheit (12a) und eine Bürsteneinheit (12b) aufweist, die an der Welleneinheit (12a) vorgesehen ist; und eine Luftflussformungsabdeckung (15) die sich entlang der Achsenrichtung der Welleneinheit (12a) der Bürste (12) erstreckt und in der Reinigungseinheit (10) zwischen der Bürste (12) und der Seitenfläche des Roboterkörpers (2) vorgesehen ist, um einen Teil von einer Seite des Roboterkörpers (2) zu einem oberen Teil der Bürste (12) auf einer gegenüberliegenden Seite der flachen Oberfläche (SF) während des Reinigens der flachen Oberfläche (SF) zu bedecken, wobei die Luftflussformungsabdeckung (15) so geformt ist, dass eine Innenfläche der Luftflussformungsabdeckung (15) auf der Seite der Bürste (12) gegenüber der Bürste (12) zurückgenommen ist und einen zurückgenommenen bzw. vertieften Raum bildet und im Querschnitt in einer umgekehrten Winkelform geformt ist,
wobei die Bürste (12) in radialen Richtungen nach außen freigelegt ist, außer bei der Luftflussformungsabdeckung (15),
wobei die Bürste (12) so gesteuert wird, dass sie sich während des Reinigens der flachen Oberfläche (SF) dreht, und zwar derart, dass
a) unter der Welleneinheit (12a) der Bürste (12) ein nach außen gerichteter Luftfluss vom Roboterkörper (2) nach außen erzeugt wird, und zwar im Zusammenhang mit der Bewegung der Bürsteneinheit (12b), während über der Welleneinheit (12a) der Bürste (12) ein nach innen gerichteter Luftfluss zu dem Roboterkörper (2) hin erzeugt wird, und wobei der nach innen gerichtete Luftfluss zu dem nach außen gerichteten Luftfluss von dem Roboterkörper (2) nach außen durch die Luftflussformungsabdeckung (15) zurückgeleitet wird, so dass Staub, der von der flachen Oberfläche (SF) weg schwebt, weggeblasen wird; oder
b) unter der Welleneinheit (12a) der Bürste (12) ein nach innen gerichteter Luftfluss zu dem Roboterkörper (2) hin im Zusammenhang mit der Bewegung der Bürsteneinheit (12b) erzeugt wird, so dass Staub, der von der flachen Oberfläche (SF) weg schwebt, in die Luftflussformungsabdeckung (15) fließt, während über der Welleneinheit (12a) der Bürste (12) ein nach außen gerichteter Luftfluss von dem Roboterkörper (2) nach außen erzeugt wird, so dass Staub, der von der flachen Oberfläche (SF) weg schwebt, nach außen wegfliegen kann.

2. Selbstfahrender Reinigungsroboter (1) nach Anspruch 1 in der Alternative a), wobei die Bürste (12) so gesteuert ist, dass sie sich in einer Richtung dreht, in welcher ein radial äußerer Endteil der Bürsteneinheit (12b) nahe an die flache Oberfläche (SF) kommt, während sie sich vom Roboterkörper (2) während der Reinigung der flachen Oberfläche (SF) weg bewegt.

3. Selbstfahrender Reinigungsroboter (1) nach Anspruch 1 oder 2, wobei die Reinigungseinheit (10) eine Luftversorgungseinheit (20) aufweist, die ausgebildet ist, um Luft zu der Bürste (12) hin zu blasen, und
wobei ein Luftabblasteil der Luftversorgungseinheit (20) in der Innenfläche der Luftflussformungsabdeckung (15) vorgesehen ist.

4. Selbstfahrender Reinigungsroboter (1) nach einem der Ansprüche 1 oder 2, wobei die Welleneinheit (12a) der Bürste (12) mit einem hohlen Rohr konstruiert ist,
wobei ein Abblasteil, der Luft bläst, in einer Seitenfläche der Welleneinheit (12a) vorgesehen ist, und
wobei die Reinigungseinheit (10) eine Luftversorgungseinheit (20) aufweist, die ausgebildet ist, um die Luft an die Welleneinheit (12a) der Bürste (12) zu liefern.

## Revendications

1. Robot de nettoyage autopropulsé (1) qui est adapté à se déplacer de façon autonome sur et à nettoyer une surface plane (SF) d'une structure (SP) installée à l'extérieur, le robot de nettoyage autopropulsé (1) comprenant :
un corps de robot (2) dans lequel des moyens de déplacement autopropulsé (4) sont prévus ; et
une unité de nettoyage (10) qui est prévue dans une surface latérale du corps de robot (2),
dans lequel l'unité de nettoyage (10) comporte :
une brosse rotative (12) qui comporte une unité d'arbre (12a) et une unité de brosse (12) prévue sur l'unité d'arbre (12a) ; et
un couvercle de formation de flux d'air (15) qui s'étend le long de la direction axiale de l'unité d'arbre (12a) de la brosse (12) et est prévu dans l'unité de nettoyage (10) entre la brosse (12) et la surface latérale du corps de robot (2) de sorte à couvrir une partie s'étendant d'un côté du corps de robot (2) jusqu'à une partie supérieure de la brosse (12) sur un côté opposé à la surface plane (SF) pendant le nettoyage de la surface plane (SF), dans lequel le couvercle de formation de flux d'air (15) est formé de sorte qu'une surface interne du couvercle de formation de flux d'air (15) sur le côté de la brosse (12) est en retrait à partir de la brosse (12) et forme un espace en retrait, et est formé dans une forme en chevron inverse en section, dans lequel la brosse (12) est exposée vers l'extérieur dans des directions radiales sauf pour le couvercle de formation de flux d'air (15),
dans lequel la brosse (12) est commandée de sorte à tourner pendant le nettoyage de la surface plane (SF) de telle sorte que
a) en-dessous de l'unité d'arbre (12a) de la brosse (12), un flux d'air vers l'extérieur est généré vers l'extérieur du corps de robot (2) en association avec le déplacement de l'unité de brosse (12b), alors qu'au-dessus de l'unité d'arbre (12a) de la brosse (12), un flux d'air vers l'intérieur est généré vers le corps de robot (2), et le flux d'air vers l'intérieur est retourné vers le flux d'air vers l'extérieur vers l'extérieur du corps de robot (2) par le couvercle de formation de flux d'air (15), de sorte que la poussière enlevée de la surface plane (SF) soit balayée ; ou
b) en-dessous de l'unité d'arbre (12a) de la brosse (12), un flux d'air vers l'intérieur est généré vers le corps de robot (2) en association avec le déplacement de l'unité de brosse (12b), de sorte que la poussière enlevée de la surface plane (SF) passe dans le couvercle de formation de flux d'air (15), alors qu'au-dessus de l'unité d'arbre (12a) de la brosse (12), un flux d'air vers l'extérieur est généré vers l'extérieur du corps de robot (2), de sorte que la poussière enlevée de la surface plane (SF) puisse s'envoler vers l'extérieur.

2. Robot de nettoyage autopropulsé selon la revendication 1, variante a), dans lequel la brosse (12) est commandée de sorte à tourner dans une direction dans laquelle une partie d'extrémité externe dans la direction radiale de l'unité de brosse (12b) vient près de la partie plane (SF) tout en s'éloignant du corps de robot (2) pendant le nettoyage de la surface plane (SF).

3. Robot de nettoyage autopropulsé selon la revendication 1 ou 2, dans lequel l'unité de nettoyage (10) comporte une unité de fourniture d'air (20) qui est adaptée à souffler de l'air vers la brosse (12), et
une ouverture de soufflage de l'unité de fourniture d'air (20) est prévue dans la surface interne du couvercle de formation de flux d'air (15).

4. Robot de nettoyage autopropulsé selon la revendication 1 ou 2, dans lequel l'unité d'arbre (12a) de la brosse (12) est construit avec un tube creux,
une ouverture de soufflage qui souffle l'air est prévue dans une surface latérale de l'unité d'arbre (12a), et
l'unité de nettoyage (10) comporte une unité de fourniture d'air (20) qui est adaptée à fournir l'air à l'unité d'arbre (12a) de la brosse (12).
